(19) Europäisches Patentamt
European Patent Office
Office européen des brevets

(11) Publication number: 0 151 042 B1

(12) **EUROPEAN PATENT SPECIFICATION**

(45) Date of publication of patent specification: 17.08.88

(51) Int. Cl.[4]: C 08 K 5/34, C 08 L 59/02

(21) Application number: 85300660.9

(22) Date of filing: 31.01.85

# (54) Polyacetal resin composition and moulded products thereof.

(30) Priority: 31.01.84 JP 15761/84

(43) Date of publication of application:
07.08.85 Bulletin 85/32

(45) Publication of the grant of the patent:
17.08.88 Bulletin 88/33

(84) Designated Contracting States:
BE DE FR GB IT NL

(58) References cited:
EP-A-0 080 431
DE-A-3 148 768

(73) Proprietor: POLYPLASTICS CO. LTD.
30 Azuchimachi 2-chome
Higashi-ku Osaka-shi (JP)

(72) Inventor: Komazawa, Hiroyasu
324, Miyashita
Fuji-shi Shizuoka (JP)
Inventor: Ikenaga, Yukio
324, Miyashita
Fuji-shi Shizuoka (JP)
Inventor: Yamawaki, Masami
94-2, Gokanjima
Fuji-shi Shizuoka (JP)

(74) Representative: Main, Peter Stephen et al
HYDE, HEIDE & O'DONNELL 146 Buckingham Palace Road
London SW1W 9TR (GB)

EP 0 151 042 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a polyacetal resin composition suitable for use under an atmosphere in which nitric oxide is present and to audio or video tape recorder parts moulded thereof.

As thermoplastic engineering plastics having excellent mechanical properties and/or good mouldability, polyacetal resins are widely used in mechanical, electrical, and various other fields of application. However, the required properties of a polyacetal resin vary according to the field of application, and thus the resin is required to have various different characteristics depending upon the application uses to which it is directed. It is known that prior art polyacetal resin compositions when used in an atmosphere in which nitric oxide is present, or in such an article as a tape recorder which involves the use of a nitro-compound such as nitrocellulose for bonding magnetic material or the like purposes, the resin is liable to discolouration by trace amounts of nitric oxide which may evolve from such article, especially where high temperature and high humidity conditions are present. This has posed a problem to be solved.

The present invention has arisen from endeavours to elucidate the cause of such discolouration and to find a solution to the problem. It has been found that when a polyacetal resin, which normally includes hindered phenolics added thereto as anti-oxidizing agents, is used in a nitric oxide atmosphere as aforesaid, the hindered phenolics will react with the nitric oxide to cause discolouration of the polyacetal resin, such discolouration being particularly noticeable where an anti-static agent is also present. For example, in a tape recorder using a tape reel made of a polyacetal resin containing a hindered phenolic anti-oxidizing agent, nitrocellulose is often used as a component of a binder for attaching a magnetic material to a tape; and in such a case, it has been observed that the reel material is liable to discolouration and that such tendency is particularly marked when the reel material contains an anti-static agent. In the event that a hindered phenolic anti-oxidizing agent is not present, the reel material shows little tendency to discolouration, but on the other hand the thermal stability of the material is adversely affected so that it will now withstand the moulding conditions.

On the basis of these observations and after further research efforts, a solution of the problem above referred to has been found. This solution is the basis of the present invention, which provides polyacetal resin compositions which are not liable or are less liable to discolouration when used in a nitric oxide atmosphere as aforesaid and which have good thermal stability and other favourable properties.

According to the present invention there is provided a polyacetal resin composition comprising a polyacetal resin and a hindered amine compound, such amine compound being present in a proportion of 0.01%—3.0% by weight relative to the total composition, a hindered phenolic anti-oxidation agent being substantially excluded from the composition, whereby the composition is not liable to discolouration in an atmosphere in which nitric oxide is present.

The invention includes an anti-static, colour-tone stable, and heat resistant polyacetal resin composition, comprising an anti-static agent contained in the polyacetal resin.

The invention also includes a video or audio tape recorder part, e.g. a reel, gear, cam, lever, clutch, guide, roller or post, characterised in that such part is moulded of a polyacetal resin composition as above defined.

According to the invention, a hindered amine compound is added to the polyacetal resin. A hindered amine affords an important advantage over the use of hindered phenolics which have been conventionally added as anti-oxidizing agents. As stated above, the presence of hindered phenolics in the prior art compositions has been found to be responsible for the discolouration of the polyacetal resin. But it has also been found that in the absence of such hindered phenolics the polyacetal resin showed poor thermal stability. By contrast when using a hindered amine compound, according to the present invention, the polyacetal resin composition is as resistant to discolouration as a prior art composition would be in the absence of a hindered phenol, while at the same time the composition containing a hindered amine compound can have as good a thermal stability as prior art compositions containing hindered phenols.

The addition of hindered amine compounds to polyacetal resins has been described in DE—A—3 148 768 (Mitsubishi) and EP—A—0 080 431 (Ciba-Geigy), but in both cases a phenolic antioxidant is present in relatively large amount. In Example I of the Mitsubishi specification, for each 100 parts by weight of the polyacetal resin, there are present as anti-oxidation agents 0.2 parts by weight of melamine, 0.5 parts by weight phenolic anti-oxidant and 0.1 parts by weight magnesium hydroxide, whereas the hindered amine compound is present as photostabiliser in an amount of 0.1 parts by weight. In Ciba-Geigy, which is directed to certain hindered amines as stabilisers for a generality of polymenic organic materials, polyacetal resins are mentioned only incidentally and are not exemplified. In Example I, however, which relates to the stabilisation of polypropylene films phenolic anti-oxidants are added in amounts of 0.05 parts by weight and amine compounds are added in slightly larger amounts of 0.075 parts by weight. Neither of these specifications describes the use of amine compounds as anti-static agents in the absence or substantial absence of hindered phenolic oxidation agent and neither of them addresses the problem of deterioration of parts moulded from polyacetal resins in atmospheres where nitric oxide is present.

The present invention does not entirely exclude the presence of hindered phenol from the composition, but if hindered phenol is included, it must be limited to a very much smaller amount than that conventionally used.

In general, the recommended hindered amines for use in compositions according to the invention are hindered secondary amines.

Among hindered amines available for use according to the invention, particular mention is made of piperidine derivatives having steric hindrance groups. Such derivatives are very effective. They include, for example:

4-acetoxy-2,2,6,6-tetramethylpiperidine,
4-stearoyloxy-2,2,6,6-tetramethylpiperidine,
4-acryloyloxy-2,2,6,6-tetramethylpiperidine,
4-methoxy-2,2,6,6-tetramethylpiperidine,
4-benzoyloxy-2,2,6,6-tetramethylpiperidine,
4-cyclo-hexyloxy-2,2,6,6-tetramethylpiperidine,
4-phenoxy-2,2,6,6-tetramethylpiperidine,
4-benzyloxy-2,2,6,6-tetramethylpiperidine,
4-phenyl-carbamoyloxy-2,2,6,6-tetramethylpiperidine,
bis(2,2,6,6-tetramethyl-4-piperidyl)oxalate,
bis(2,2,6,6-tetramethyl-4-piperidyl)malonate,
bis(2,2,6,6-tetramethyl-4-piperidyl)adipate,
bis(2,2,6,6-tetramethyl-4-piperidyl)sebacate,
bis(2,2,6,6-tetramethyl-4-piperidyl)terephthalate,
1,2-bis(2,2,6,6-tetramethyl-4-piperidyl)ethane,
bis(2,2,6,6-tetramethyl-4-piperidyl)hexamethylene-1,6-dicarbamate,
bis(1,1 methyl-2,2,6,6-tetramethyl-4-piperidyl)adipate, and
tris(2,2,6,6-tetramethyl-4-piperidyl)benzene-1,3,5-tricarboxylate.

Particularly preferred hindered amines, which have been found to be very effective for achieving high resistance to discolouration in combination with good thermal stability are those containing a 2,2,6,6-tetra-($C_1$—$C_4$ alkyl)-4-piperidyl group.

Among the most preferred hindered amines for use according to the invention are:

bis(2,2,6,6-tetramethyl-4-piperidyl)oxalate,
bis(2,2,6,6-tetramethyl-4-piperidyl)malonâte,
bis(2,2,6,6-tetramethyl-4-piperidyl)adipate, and
bis(2,2,6,6-tetramethyl-4-piperidyl)sebacate.

Other hindered amine antioxidants can be used, e.g. hindered piperazine compounds or cyclic (saturated or unsaturated) N-substituted compounds containing a secondary hindered amine group. The hindered amine compounds can be of homopolymeric or copolymeric form.

The selected hindered amine(s) is (are) added in a proportion of 0.01—3.0% by weight relative to the total weight of the composition. If the addition is smaller than 0.01% by weight, the thermal stability of the composition is inadequate. If the addition is larger than 3.0% by weight, it may affect other properties of the polyacetal resin. Furthermore, such a high proportion is undesirable from an economic standpoint. Preferably, the proportion of the addition is 0.5%—1.5% by weight.

The invention includes compositions wherein two or more hindered amine compounds are present together in an aggregate proportion of 0.01—3.0% by weight.

In preferred embodiments of the invention, the polyacetal resin composition also includes an anti-static agent. Such agent can be present in any desired amount. As previously described the discolouration problem associated with prior art compositions containing a hindered phenol was found to be particularly marked in the case of compositions containing an anti-static agent. A hindered amine can be used in conjunction with an anti-static agent without giving rise to a similar adverse effect.

For anti-static purposes use can be made of any known anti-static agent comprising one or more kinds of surface-active compounds selected from the group consisting of aliphatic amines, aliphatic amides, polyalkylene glycols, and aliphatic esters of polyhydroxy alcohol, more particularly aliphatic esters of polyhydroxy having hydroxyl groups. The amount of such agent which is added may vary depending upon the desired degree of anti-static effect, but suitably it is 0.1—2.0% by weight relative to the amount of the polyacetal resin. While these anti-static agents tend to have a colouring effect if used together with hindered phenolics, they show favourable performance in the presence of a hindered amine compound: they not only provide good anti-static properties, but also can contribute towards colour stability.

Polyacetal resin compositions according to the present invention can advantageously be used in various fields of application. Their use in such fields as electrical and electronic components is deserving of particular mention. More specifically, video or audio tape recorder parts moulded of such polyacetal resin compositions have improved resistance to discolouration in the presence of tapes, and they also have good thermal stability.

Polyacetals used for the purpose of the present invention can be in homopolymeric or copolymeric form. There is no limitation as to polymerization degree. For the purposes primarily in view they are required to have a fluidity suitable for moulding, and good mechanical properties as required for service in the form of moulded products.

In order to improve physical properties of the composition, as may be required for any given use, one or more other additives may be incorporated in the composition. Such other additive(s) can be selected

from those conventionally used in the art. For example a stabilizer can be included, such as a polyamide, an amidine compound, preferably a melamine compound or a guanamine compound, a metal hydroxide, an organic or inorganic acid salt, or an alkali or alkaline earth metal. As further examples, a lubricant, a release agent, a nucleating agent, a rub-and-wear-resistance improver, a colouring substance such as a dye or a pigment, an inorganic filler or a reinforcing agent can be added to the composition e.g. in the form of granules, powder or fibres or in lamellar (e.g. flake) form. A modifier of an organic polymer may be used for the purpose.

A composition according to the invention and products formed of such composition can be prepared using any known techniques. For example, the respective ingredients can be mixed with each other and the mixture can then be kneaded and extruded into pellets, which are subsequently moulded. Another procedure is to mix individual pellets having different compositions, to form a composition of the invention before it is moulded. A further possible procedure is to feed the individual ingredients directly to the moulding machine. For example some of the components of the composition can be fed into a first feed port of an extruder; and when that part of the composition is melted, the other of the components can be fed into a second feed port. The components can then be pelletized for use in a subsequent moulding operation.

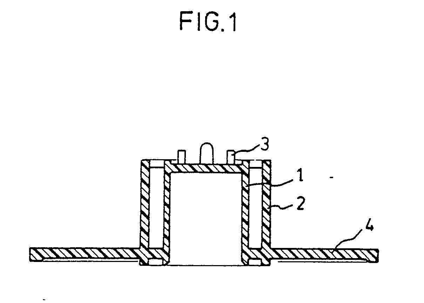

Reference is now made to the accompanying drawing which shows part of a tape reel made of a composition according to the present invention. Of course the particular form of the reel illustrated is selected only by way of example. The illustrated part consists essentially of cyindrical inner and outer tubes 1 and 2. The inner tube is for engaging a rotatable reel spindle of a video deck or the like. The outer tube 2 serves as a tape core. The said tubes are integral with a disc-shaped side plate 4. The inner tube carries boss elements such as 3 for attachment of the second side plate (not shown). Such tape reel, made in accordance with the present invention, with a tape mounted thereon, can be used in a high-temperature and high-humidity atmosphere, without discolouration being caused to the tape reel. Yet, the tape reel can at the same time exhibit other desirable properties which are attainable by using known polyacetal resin compositions containing hindered phenolics.

The production and advantageous properties of polyacetal resin compositions according to the invention are illustrated by the following non-limiting Examples:

Examples 1—8

Eight different compositions were prepared. In each case, a hindered amine in a proportion as shown in Table 1 was added to a polyacetal copolymer containing 2.5% (by weight) of oxyethylene groups. The hindered amine antioxidants used are identified at the foot of the Table. Also in each case 0.1% by weight of melamine, 0.15% by weight of glycerine monostearate and 0.85% by weight of polyethylene glycol were added as anti-static agents. Each composition was melted and mixed into pellets in a 40 m/m extruder (single screw, Dulmage). The pellets were injection-moulded into tape reel parts. For test purposes, the tape reels were placed together with two kinds of commercially available tapes for 72 hours at 80°C. The susceptibility of the tape reels to discolouration under those conditions was determined by measuring values L, *a* and *b*, both prior to and after subjecting them to those conditions, using a Hunter differential colourmeter. The discolouration is expressed in terms of ΔE value as calculated by the following equation. The greater the ΔE value, the greater is the degree of discolouration.

$$\Delta E = (L_1 - L_2)^2 + (a_1 - a_2)^2 \times (b_1 - b_2)^2$$

where $L_1$, $a_1$, $b_1$ denote before-test measurements and $L_2$, $a_2$, $b_2$ denote after-test measurements.

Also, pellets of the different compositions were evaluated as to thermal stability. Their thermal stability was indicated in terms of their percentage weight decrease per minute due to heating as measured during subjection of the pellets to heating at 230°C for 45 minutes.

The discolouration and thermal stability test results are given in the Table (Table 1).

Examples 9—12 (Comparative)

Four different polyacetal resin compositions were prepared in the same way as in Examples 1 to 8. Each of the four compositions was the same as those used in Examples 1 to 8 except that in three of the compositions a hindered phenol was used instead of a hindered amine and in the fourth, neither a hindered amine nor a hindered phenol was used. The hindered phenols used, and their proportions, are shown in Table 2. The compositions were tested and evaluated in the same way as those according to Examples 1 to 8. Table 2 shows the results.

From comparison of the test results in Tables 1 and 2, it is apparent that the compositions in accordance with the invention have a thermal stability comparable to that of the compositions containing a hindered phenol and show no or appreciably less discolouration than those hindered phenol-containing compositions.

TABLE 1

| Example No | Hindered Amine (Note) Material | Weight % | Colour difference(ΔE) Tape A | Tape B | Thermal stability |
|---|---|---|---|---|---|
| 1 | (1) | 0.05 | 7.5 | 7.1 | 0.037 |
| 2 | (1) | 0.15 | 9.8 | 8.1 | 0.023 |
| 3 | (1) | 0.30 | 9.6 | 8.6 | 0.021 |
| 4 | (1) | 0.50 | 7.7 | 8.6 | 0.018 |
| 5 | (1) | 1.50 | 7.8 | 8.9 | 0.015 |
| 6 | (2) | 0.30 | 9.7 | 8.8 | 0.179 |
| 7 | (2) | 0.50 | 9.8 | 9.0 | 0.135 |
| 8 | (1)<br>(2) | 0.15<br>0.15 | 9.8 | 8.1 | 0.023 |

Notes: (1) bis (2, 2, 6, 6-tetramethyl-4-piperidyl) sebacate (Japan Ciba-Geigy, trade name SANOL-LS 770 ).

(2)

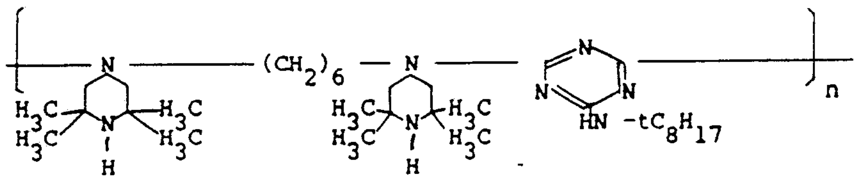

(Japan Ciba-Geigy, trade name SANOL-LS 944 - SANOL 944 is a Registered Trade Mark).

TABLE 2

| Reference Example No. | Hindered phenolics (Note) Material | Weight % | Colour difference(ΔE) Tape A | Tape B | Thermal stability |
|---|---|---|---|---|---|
| 9 | (3) | 0.3 | 34.2 | 27.0 | 0.017 |
| 10 | (4) | 0.3 | 27.7 | 20.0 | 0.019 |
| 11 | (4) | 0.5 | 35.5 | 29.2 | 0.017 |
| 12 | - | 0 | 6.3 | 5.9 | 0.443 |

Note: (3) Tetrakis [methylene (3, 5 di-t-butyl-4-hydroxyhydrocinnamate)] methane (Japan Ciba-Geigy; trade name Irganox 1010)

(4) Triethyleneglycol-bis-3-(3-t-butyl-4-hydroxy-5-methylphenyl) propionate Japan Ciba-Geigy; trade name Irganox 245) ( IRGANOX 245 is a Registered Trade Mark. )

Examples 13—20

Pellets were prepared and moulded to form reel parts as in Examples 1 to 8, the compositions being as in those examples but without the addition of glycerin mono-stearate and polyethylene glycol as antistatic agents. The compositions were tested for colour change and thermal stability in the same way. The results are shown in Table 3.

Examples 21—24 (Comparative)

Comparative Examples 9 to 12 were repeated except for the omission of the glycerin monostearate and polyethylene glycol and were tested for colour change and thermal stability in the same way. The results are shown in Table 4.

Comparison of Tables 3 and 4 shows that even where anti-static agents are not present, the tape reels moulded of the compositions according to the invention, which contains a hindered amine, are less liable to discolouration than the compositions containing a hindered phenol and yet have as good a thermal stability as those hindered phenol-containing compositions.

TABLE 3

| Example No | Hindered Amine | | Colour difference | | Thermal stability |
|---|---|---|---|---|---|
| | (Note) Material | Weight % | Tape A | Tape B | |
| 13 | (1) | 0.05 | 6.5 | 6.1 | 0.025 |
| 14 | (1) | 0.15 | 8.6 | 7.0 | 0.018 |
| 15 | (1) | 0.30 | 8.5 | 7.9 | 0.016 |
| 16 | (1) | 0.50 | 8.1 | 7.8 | 0.015 |
| 17 | (1) | 1.50 | 8.0 | 8.5 | 0.012 |
| 18 | (2) | 0.30 | 8.6 | 8.1 | 0.102 |
| 19 | (2) | 0.50 | 8.8 | 8.0 | 0.086 |
| 20 | (1)<br>(2) | 0.15<br>0.15 | 8.5 | 7.9 | 0.020 |

TABLE 4

| Example No. | Hindered phenolics | | Colour difference(ΔE) | | Thermal stability |
|---|---|---|---|---|---|
| | (Note) Material | Weight % | Tape A | Tape B | |
| 21 | (3) | 0.3 | 19.2 | 18.4 | 0.011 |
| 22 | (4) | 0.3 | 18.3 | 15.2 | 0.012 |
| 23 | (4) | 0.5 | 21.5 | 20.2 | 0.010 |
| 24 | - | 0 | 5.2 | 5.1 | 0.312 |

Examples 25 to 31

Seven compositions were prepared by adding to polyacetal copolymer a hindered amine, as a stabilizer, as first additive and another stabiliser as second additive, in the respective amounts shown in Table 5. Then 0.15 wt% of glycerine monostearate as an anti-static agent and 0.85 wt% of polyethylene glycol were added. Each of the obtained compositions was formed into a sample and tested in the same way as in Example 1. The results are shown in Table 5.

Examples 32 to 40 (Comparative)

Six control compositions were prepared as in Examples 25—31 except that a hindered phenol was used instead of a hindered amine, and in the proportions shown in Table 6 (Examples Nos. 32—37). And three further compositions, which contained neither a hindered amine nor a hindered phenol were prepared: Table 6 — Examples Nos. 38—40.

The compositions of Examples 32 to 40 were all tested and evaluated like the compositions in Example 1. The results are shown in the Table (Table 6).

Comparison of Tables 5 and 6 shows that the compositions containing the second additives have a much better resistance to discolouration in the cases that a hindered amine is incorporated rather than a hindered phenol, while the thermal stability of those compositions according to the invention is comparable with that of the hindered phenol-containing compounds and is much better than the compositions containing neither of those ingredients.

TABLE 5

| Example No. | stability | | | | color difference | | thermal stability |
|---|---|---|---|---|---|---|---|
| | First Additive (hindered amine) | | Second Additive | | | | |
| | (note) material | wt.% | material | wt.% | Tape A | Tape B | |
| 25 | (1) | 0.30 | CTU-guanamine (a) | 0.40 | 9.2 | 8.3 | 0.035 |
| 26 | (1) | 0.30 | Diamid L-1801 (b) | 0.20 | 10.2 | 9.4 | 0.013 |
| 27 | (1) | 0.30 | benzoguanamine | 0.40 | 9.4 | 8.8 | 0.027 |
| 28 | (2) | 0.50 | CTU-guanamine (a) | 0.40 | 8.9 | 9.1 | 0.105 |
| 29 | (2) | 0.50 | Diamid L-1801 (b) | 0.20 | 9.9 | 9.7 | 0.114 |
| 30 | (5) | 0.20 | CTU-guanamine (a) | 0.40 | 10.1 | 9.5 | 0.026 |
| 31 | (5) | 0.20 | benzoguanamine | 0.40 | 10.6 | 9.6 | 0.028 |

Notes (1): in Table 1

(2): in Table 1

(5):

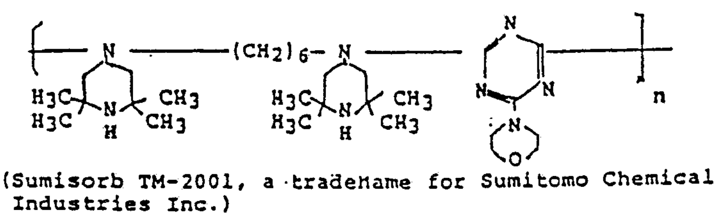

(Sumisorb TM-2001, a tradename for Sumitomo Chemical Industries Inc.)

(a) trademark of Fuji Kasei Kogyo K.K

(b) trademark of Daicel Chemical Industries, Ltd., nylon 12

TABLE 6

| Control No. | stabilizer | | | | color difference | | thermal stability |
|---|---|---|---|---|---|---|---|
| | First Additive (hindered phenol) | | Second Additive | | | | |
| | material (note) | wt.% | material | wt.% | Tape A | Tape B | |
| 32 | (3) | 0.30 | CTU-guanamine (a) | 0.40 | 32.4 | 27.3 | 0.020 |
| 33 | (3) | 0.30 | Diamid L-1801 (b) | 0.20 | 36.1 | 30.2 | 0.012 |
| 34 | (3) | 0.30 | benzoguanamine | 0.40 | 33.5 | 29.8 | 0.016 |
| 35 | (4) | 0.20 | CTU-guanamine (a) | 0.40 | 27.2 | 20.7 | 0.021 |
| 36 | (4) | 0.20 | Diamid L-1801 (b) | 0.20 | 28.7 | 21.3 | 0.012 |
| 37 | (4) | 0.20 | benzoguanamine | 0.40 | 26.1 | 20.4 | 0.019 |
| 38 | - | - | CTU-guanamine (a) | 0.40 | 6.7 | 6.2 | 0.527 |
| 39 | - | - | Diamid L-1801 (b) | 0.20 | 8.2 | 7.5 | 0.418 |
| 40 | - | - | benzoguanamine | 0.40 | 6.2 | 5.8 | 0.452 |

## Claims

1. A polyacetal resin composition comprising a polyacetal resin and a hindered amine compound, such amine compound being present in a proportion of 0.01%—3.0% by weight of the total composition, a hindered phenolic anti-oxidation agent being substantially excluded from the composition, whereby the composition is not liable to discolouration in at atmosphere in which nitric oxide is present.

2. A polyacetal resin composition according to claim 1, wherein one or more hindered secondary amine anti-oxidants is or are present.

3. A polyacetal resin composition according to claim 1 or 2, wherein the hindered amine content of the composition consists of or includes a piperidine derivative.

4. A composition according to any of claims 1 to 3, wherein the hindered amine content of the composition consists of or includes a piperidine derivative selected from those having steric hindrance groups.

5. A composition according to any preceding claim wherein the hindered amine content of the composition consists of or includes a hindered amine containing a 2,2,6,6-tetra($C_1$—$C_4$ alkyl)-4-piperidyl group.

6. A composition according to any preceding claim wherein the composition incorporates at least one hindered amine compound chosen from the following:

4-acetoxy-2,2,6,6-tetramethylpiperidine,
4-stearoyloxy-2,2,6,6-tetramethylpiperidine,
4-acryloyloxy-2,2,6,6-tetramethylpiperidine,
4-methoxy-2,2,6,6-tetramethylpiperidine,
4-benzoyloxy-2,2,6,6-tetramethylpiperidine,
4-cyclo-hexyloxy-2,2,6,6-tetramethylpiperidine,
4-phenoxy-2,2,6,6-tetramethylpiperidine,
4-benzyloxy-2,2,6,6-tetramethylpiperidine,
4-phenyl-carbamoyloxy-2,2,6,6-tetramethylpiperidine,
bis(2,2,6,6-tetramethyl-4-piperidyl)oxalate,
bis(2,2,6,6-tetramethyl-4-piperidyl)malonate,
bis(2,2,6,6-tetramethyl-4-piperidyl)adipate,
bis(2,2,6,6-tetramethyl-4-piperidyl)sebacate,

bis(2,2,6,6-tetramethyl-4-piperidyl)terephthalate,
1,2-bis(2,2,6,6-tetramethyl-4-piperidyl)ethane,
bis(2,2,6,6-tetramethyl-4-piperidyl)hexamethylene-1,6-dicarbamate,
bis(1,1 methyl-2,2,6,6-tetramethyl-4-piperidyl)adipate, and
tris(2,2,6,6-tetramethyl-4-piperidyl)benzene-1,3,5-tricarboxylate.

7. A composition according to claim 6, wherein the composition incorporates at least one of the hindered amine compounds chosen from a polymer having repeating units of the formula:—

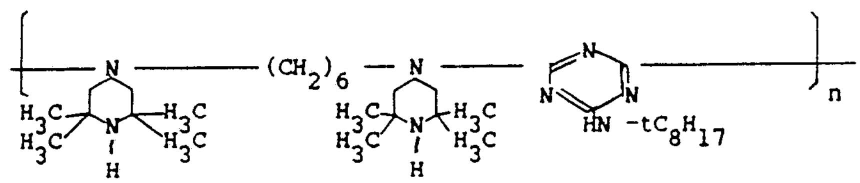

8. A composition according to any preceding claim, wherein the polyacetal resin composition contains an anti-static agent in an amount of 0.2—2% by weight of the polyacetal resin.

9. A composition according to claim 8, wherein the anti-static agent comprises one or more kinds of compounds selected from the group consisting of aliphatic amine compounds, aliphatic amide compounds, aliphatic esters of a polyhydric alcohol, and polyalkylene glycols.

10. A video or audio tape recorder part moulded of a polyacetal resin composition, characterised in that said composition comprises a polyacetal resin and at least one hindered amine compound, such amine compound(s) being present as anti-oxidation agent in a proportion of 0.01—3.0% by weight of the total composition, a hindered phenolic anti-oxidation agent being substantially excluded from the composition, whereby the part is not liable to discolouration in an atmosphere in which nitric oxide is present.

11. A video or audio tape recorder part moulded of a polyacetal resin composition characterised in that the composition comprises firstly an anti-static agent in an amount of 0.2—2% by weight of the polyacetal resin and secondly, at least one hindered amine compound, such amine compound(s) being present as anti-oxidation agent in a proportion of 0.01—3.0% by weight of the total composition, a hindered phenolic anti-oxidation agent being substantially excluded from the composition, whereby the part is not liable to discolouration in an atmosphere in which nitric oxide is present.

12. A video or audio tape recorder part according to claim 11, wherein the anti-static agent comprises one or more kinds of compounds selected from the group consisting of aliphatic amine compounds, aliphatic amide compounds, aliphatic esters of polyhydric alcohol, and polyalkylene glycols.

13. A video or audio tape recorder part according to any of claims 10 to 12, such part being a tape reel.

**Patentansprüche**

1. Polyacetal-Harz-Zusammensetzung, umfassend ein Polyacetal-Harz und eine gehinderte Amin-Verbindung, wobei eine derartige Amin-Verbindung in einem Anteil von 0,01 bis 3,0 Gew.-% der Gesamt-Zusammensetzung anwesend ist und ein gehindertes phenolisches Antioxidationsmittel im wesentlichen von der Zusammensetzung ausgeschlossen ist, wodurch die Zusammensetzung in einer Stickstoffoxid enthaltenden Atmosphäre nicht der Verfärbung unterliegt.

2. Polyacetal-Harz-Zusammensetzung nach Anspruch 1, worin ein oder mehrere gehinderte sek-Amin-Antioxidationsmittel vorhanden sind.

3. Polyacetal-Harz-Zusammensetzung nach Anspruch 1 oder 2, worin der Gehalt der Zusammensetzung an gehindertem Amin aus einem Piperidin-Derivat besteht oder ein solches umfaßt.

4. Zusammensetzung nach den Ansprüchen 1 bis 3, worin der Gehalt der Zusammensetzung an gehindertem Amin aus einem Piperidin-Derivat, das aus solchen mit sterischen Hinderungs-Gruppen ausgewählt ist, besteht oder ein solches umfaßt.

5. Zusammensetzung nach irgendeinem vorhergehenden Anspruch, worin der Gehalt der Zusammensetzung an gehindertem Amin aus einem gehinderten Amin, das eine 2,2,6,6-Tetra($C_1$—$C_4$-alkyl)-4-piperidyl-Gruppe enthält, besteht oder ein solches umfaßt.

6. Zusammensetzung nach irgendeinem vorhergehenden Anspruch, worin in der Zusammensetzung wenigstens eine gehinderte Amin-Verbindung enthalten ist, die aus den folgenden ausgewählt ist:

4-Acetoxy-2,2,6,6-tetramethylpiperidin,
4-Stearyloxy-2,2,6,6-tetramethylpiperidin,
4-Acryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-tetramethylpiperidin,
4-Benzyloxy-2,2,6,6-tetramethylpiperidin,
4-Phenylcarbamoyloxy-2,2,6,6-tetramethylpiperidin,

Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,
Bis(2,2,6,6-tetramethyl-4-piperidyl)sebacat,
Bis(2,2,6,6-tetramethyl-4-piperidyl)terephthalat,
1,2-Bis(2,2,6,6-tetramethyl-4-piperidyl)ethan,
Bis(2,2,6,6-tetramethyl-4-piperidyl)hexamethylen-1,6-dicarbamat,
Bis(1,1-dimethyl-2,2,6,6-tetramethyl-4-piperidyl)adipat und
Tris(2,2,6,6-tetramethyl-4-piperidyl)benzol-1,3,5-tricarboxylat.

7. Zusammensetzung nach Anspruch 6, worin in der Zusammensetzung wenigstens eine der gehinderten Amin-Verbindungen enthalten ist, die aus Polymeren mit wiederkehrenden Einheiten der folgenden Formel ausgewählt ist:

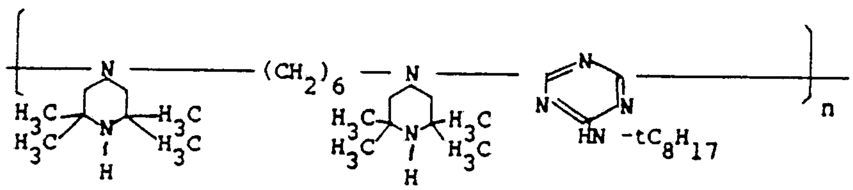

8. Zusammensetzung nach irgendeinem vorhergehenden Anspruch, worin die Polyacetal-Harz-Zusammensetzung ein antistatisches Mittel in einer Menge von 0,2 bis 2 Gew.-% des Polyaceal-Harzes enthält.

9. Zusammensetzung nach Anspruch 8, worin das antistatische Mittel eine oder mehrere Arten von Verbindungen umfaßt, die aus der aus aliphatischen Amin-Verbindungen, aliphatischen Amid-Verbindungen, aliphatischen Estern eines mehrwertigen Alkohols und Polyalkylenglycolen bestehenden Gruppe ausgewählt sind.

10. Aus einer Polyacetal-Harz-Zusammensetzung formgepreßtes Teil für ein Video- oder Audio-Bandaufzeichnungsgerät, dadurch gekennzeichnet, daß die Zusammensetzung ein Polyacetal-Harz und wenigstens eine gehinderte Amin-Verbindung umfaßt, wobei solche Amin-Verbindung(en) als Antioxidationsmittel in einem Anteil von 0,01 bis 3,0 Gew.-% der Gesamt-Zusammensetzung anwesend ist (sind) und ein gehindertes phenolisches Antioxidationsmittel im wesentlichen von der Zusammensetzung ausgeschlossen ist, wodurch das Teil in einer Stickstoffoxid enthaltenden Atmosphäre nicht der Verfärbung unterliegt.

11. Aus einer Polyacetal-Harz-Zusammensetzung formgepreßtes Teil für ein Video- oder Audio-Bandaufzeichnungsgerät, dadurch gekennzeichnet, daß die Zusammensetzung erstens ein antistatisches Mittel in einer Menge von 0,2 bis 2 Gew.-% des Polyacetal-Harzes und zweitens wenigstens eine gehinderte Amin-Verbindung umfaßt, wobei solche Amin-Verbindung(en) als Antioxidationsmittel in einem Anteil von 0,01 bis 3,0 Gew.-% der Gesamt-Zusammensetzung anwesend ist (sind) und ein gehindertes phenolisches Antioxidationsmittel im wesentlichen von der Zusammensetzung ausgeschlossen ist, wodurch das Teil in einer Stickstoffoxid enthaltenden Atmosphäre nicht der Verfärbung unterliegt.

12. Teil für ein Video- oder Audio-Bandaufzeichnungsgerät nach Anspruch 11, worin das antistatische Mittel eine oder mehrere Arten von Verbindungen umfaßt, die aus der aus aliphatischen Amin-Verbindungen, aliphatischen Amid-Verbindungen, aliphatischen Estern eines mehrwertigen Alkohols und Polyalkylenglycolen bestehenden Gruppe ausgewählt sind.

13. Teil für ein Video- oder Audio-Bandaufzeichnungsgerät nach irgendeinem der Ansprüche 10 bis 12, das eine Band-Spule ist.

**Revendications**

1. Une composition de résine polyacétal, comprenant une résine polyacétal et une amine à empêchement stérique, cette amine étant présente en une proportion de 0,01% à 3,0% en poids de la composition totale, un agent antioxydant phénolique à empêchement stérique étant sensiblement exclu de la composition, de sorte que la composition ne soit pas sujette à une altération de couleur dans une atmosphère où de l'oxyde azotique est présent.

2. Une composition de résine polyacétal selon la revendication 1, dans laquelle un ou plusieurs agents antioxydants de type amine secondaire à empêchement stérique sont présents.

3. Une composition à base de résine polyacétal selon la revendication 1 ou 2, dans laquelle la teneur en amine à empêchement stérique de la composition consiste en, ou comprend, un dérivé de pipéridine.

4. Une composition selon l'une quelconque des revendications 1 à 3, dans laquelle la teneur en amine à empêchement stérique de la composition consiste en, ou comprend, un dérivé de pipéridine choisi parmi ceux qui comportent des groupes à empêchement stérique.

5. Une composition selon l'une quelconque des revendications précédentes, dans laquelle la teneur en amine à empêchement stérique de la composition consiste en, ou comprend, une amine à empêchement stérique contenant un groupe 2,2,6,6-tétra(alkyle en $C_1$—$C_4$)-4-pipéridyle.

6. Une composition selon l'une quelconque des revendications précédentes, dans laquelle est incorporée au moins une amine à empêchement stérique choisie parmi les suivantes:

4-acétoxy-2,2,6,6-tétraméthylpipéridine,
4-stéaroyloxy-2,2,6,6-tétraméthylpipéridine,
4-acryloyloxy-2,2,6,6-tétraméthylpipéridine,
4-méthoxy-2,2,6,6-tétraméthylpipéridine,
4-benzoyloxy-2,2,6,6-tétraméthylpipéridine,
4-cyclohexyloxy-2,2,6,6-tétraméthylpipéridine,
4-phénoxy-2,2,6,6-tétraméthylpipéridine,
4-benzyloxy-2,2,6,6-tétraméthylpipéridine,
4-phénylcarbamoyloxy-2,2,6,6-tétraméthylpipéridine,
oxalate de bis(2,2,6,6-tétraméthyl-4-pipéridyle),
malonate de bis(2,2,6,6-tétraméthyl-4-pipéridyle),
adipate de bis(2,2,6,6-tétraméthyl-4-pipéridyle),
sébacate de bis(2,2,6,6-tétraméthyl-4-pipéridyle),
téréphtalate de bis(2,2,6,6-tétraméthyl-4-pipéridyle),
1,2-bis(2,2,6,6-tétraméthyl-4-pipéridyl)éthane,
hexaméthylène-1,6-dicarbamate de bis(2,2,6,6-tétraméthyl-4-pipéridyle),
adipate de bis(1,1,-diméthyl-2,2,6,6-tétraméthyl-4-pipéridyle), et
benzène-1,3,5-tricarboxylate de tris(2,2,6,6-tétraméthyl-4-pipéridyle).

7. Une composition selon la revendication 6, dans laquelle est incorporée au moins une amine à empêchement stérique choisie parmi les polymères ayant de motifs répétés de formule:

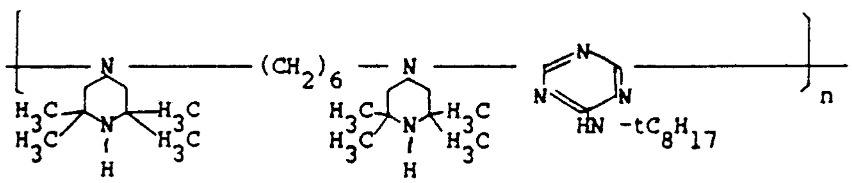

8. Une composition selon l'une quelconque des revendications précédentes, qui contient un agent antistatique en une proportion de 0,2 à 2% en poids par rapport au poids de la résine polyacétal.

9. Une composition selon la revendication 8, dans laquelle l'agent antistatique comprend une ou plusieurs espèces de composés choisies dans le groupe formé par les amines aliphatiques, les amides aliphatiques, les esters aliphatiques d'un polyalcool et les polyalkylène-glycols.

10. Une pièce de magnétophone ou de magnétoscope, moulée en une composition de résine polyacétal, caractérisée en ce que ladite composition comprend une résine polyacétal et au moins une amine à empêchement stérique, cette ou ces amines étant présentes en tant qu'agent antioxydant en une proportion de 0,01 à 3,0% en poids de la composition totale, un agent antioxydant phénolique à empêchement stérique étant sensiblement exclus de la composition, de sorte que la pièce ne soit pas sujette à une altération de couleur dans une atmosphère où de l'oxyde azotique est présent.

11. Une pièce de magnétophone ou de magnétoscope, moulée en une composition de résine polyacétal, caractérisée en ce que la composition comprend, premièrement, un agent antistatique en une proportion de 0,2 à 2% en poids par rapport au poids de la résine polyacétal et, deuxièmement, au moins une amine à empêchement stérique, cette ou ces amines étant présentes en tant qu'agent antioxydant en une proportion de 0,01 à 3,0% en poids de la composition totale, un agent antioxydant phénolique à empêchement stérique étant sensiblement exclus de la composition, de sorte que la pièce ne soit pas sujette à une altération de couleur dans une atmosphère où de l'oxyde azotique est présent.

12. Une pièce de magnétophone ou de magnétoscope selon la revendication 11, dans laquelle l'agent antistatique comprend une ou plusieurs espèces de composés choisies dans le groupe formé par les amines aliphatiques, les amides aliphatiques, les esters aliphatiques, de polyalcool et les polyalkylène-glycols.

13. Une pièce de magnétophene ou de magnétoscope selon l'une quelconque des revendications 10 à 12, cette pièce étant une bobine de bande.

FIG.1